# EUROPÄISCHE PATENTSCHRIFT

(11) **EP 2 691 666 B1**
(45) Veröffentlichungstag und Bekanntmachung des Hinweises auf die Patenterteilung: **26.08.2015**
(21) Anmeldenummer: 12728449.5
(22) Anmeldetag: 12.06.2012
(51) Int. Cl.: F16C 35/02, F16C 39/04

(54) **LAGERANORDNUNG ZUM LAGERN EINES LAGERS**
BEARING ARRANGEMENT FOR BEARING A BEARING
ENSEMBLE PALIER PERMETTANT DE LOGER UN PALIER

(30) Priorität: 22.06.2011 EP 11170976
(43) Veröffentlichungstag der Anmeldung: 05.02.2014
(73) Patentinhaber: Siemens Aktiengesellschaft, 80333 München (DE)
(72) Erfinder: ULMA, Andreas, 45481 Mülheim an der Ruhr (DE)
(86) Internationale Anmeldenummer: PCT/EP2012/061057
(87) Internationale Veröffentlichungsnummer: WO 2012/175364

(56) Entgegenhaltungen:
- EP-A1- 0 055 548
- DE-A1- 1 908 159
- GB-A- 539 350
- US-A- 1 503 459

## Beschreibung

Die Erfindung betrifft eine Lageranordnung zum Lagern eines Lagers in einem Lagergehäuse.

Eine Strömungsmaschine weist einen Rotor mit einer Welle auf, die mittels einer Lageranordnung auf einem Fundament drehbar gelagert ist. Das Lager ist insbesondere als ein Radiallager ausgeführt, mit dem radiales Abstützen der Welle bewerkstelligbar ist. In Abhängigkeit der Bauart und der Auslegung des Lagers sind die rotordynamischen Eigenschaften des Rotors mit beeinflusst. Es ist bekannt, das Lager in einem Lagergehäuse zu montieren. Erstrebenswert ist es, dass die Montage des Lagers in dem Lagergehäuse einfach bewerkstelligbar ist, wobei die Lage des Lagers im Lagergehäuse hinsichtlich seiner seitlichen, axialen und vertikalen Lage einstellbar sein soll. Ebenfalls sollen Winkelabweichungen, die beispielsweise aufgrund von Fertigungstoleranzen sich einstellen, zwischen dem Lager und dem Lagergehäuse ausgleichbar sein. Ferner soll eine ausreichende relative Wärmebeweglichkeit zwischen dem Lager und dem Lagergehäuse möglich sein, um thermisch bedingte Verspannungen zu unterbinden.

Herkömmlich ist es bekannt am Lagergehäuse Passkeile vorzusehen, die ein entsprechendes Spiel des Lagergehäuses zulassen. Das Spiel ermöglicht eine relative Bewegung des Lagers zum Lagergehäuse während des Betriebs der Strömungsmaschine. Die relative Bewegung des Lagers zum Lagergehäuse kann beispielsweise durch die Übertragung von rotordynamisch bedingten Schwingungen der Welle verursacht sein. Die Wellenschwingungen können beispielsweise durch eine Unwucht des Rotors verursacht sein, wodurch die relative Bewegung des Lagers zum Lagergehäuse derart stark auftreten kann, dass das Spiel überbrückt wird. Dabei prallen die Passkeile auf ihre Auflageflächen, die hierbei durch Hämmerspuren verschlissen werden können. Außerdem besteht die Gefahr, dass beim Hämmern der Passkeile auf ihre Auflageflächen die rotordynamischen Eigenschaften der Welle bzw. des Rotors derart ungünstig sich einstellen, dass die Wellenschwingungen sich kontinuierlich erhöhen, wodurch schließlich ein Abschalten der Strömungsmaschine notwendig wird.

Beispielsweise ist eine Lageranordnung gemäß dem Stand der Technik aus der Offenlegungsschrift DE 1 908 159 vorbekannt.

Aufgabe der Erfindung ist es, eine Passvorrichtung zum Lagern eines Lagers in einem Lagergehäuse und eine Lageranordnung mit dem Lagergehäuse, dem Lager sowie der Passvorrichtung zu schaffen, wobei die Lageranordnung eine hohe Festigkeit und günstige rotordynamische Eigenschaften hat.

Die erfindungsgemäße Lageranordnung zum Lagern eines Lagers in einem Lagergehäuse weist eine einen zylinderförmigen Vorsprung aufweisende Vorsprungsplatte und eine Aussparungsplatte auf, die an der den Vorsprung aufweisenden Seite der Vorsprungsplatte angeordnet ist und in der eine zylinderförmige Aussparung vorgesehen ist, in die der Vorsprung unter Ausbilden eines Vorsprungspiels zwischen dem Vorsprungsumfang und dem Aussparungsumfang längsverschiebbar eingreift, wobei an dem Lagergehäuse eine Lagergehäuseabstützfläche und an dem Lager eine zur Lagergehäuseabstützfläche parallele Lagerabstützfläche ausgebildet sind, zwischen denen die Passvorrichtung angeordnet ist, wobei die Aussparung mit einer Hydraulikflüssigkeit druckbeaufschlagt ist, so dass in Abhängigkeit des Vorsprungspiels dieses von der Hydraulikflüssigkeit durchströmt ist, wodurch die Vorsprungsplatte gegen eine der Abstützflächen und die Aussparungsplatte gegen die andere der Abstützflächen hydraulisch gedämpft vorgespannt sind.

Der zylinderförmige Vorsprung ist irgendein gerader allgemeiner Zylinder oder ein Prisma. Bevorzugt ist, dass der Vorsprung ein gerader Kreiszylinder ist.

Bevorzugtermaßen ist zwischen dem Vorsprungsumfang und dem Aussparungsumfang ein Hydraulikkanal ausgebildet, mit dessen Querschnitt die hydraulische Dämpfung der Passvorrichtung eingestellt ist. Ferner ist es bevorzugt, dass zwischen der Aussparungsplatte und der Vorsprungsplatte ein Plattenspiel ausgebildet ist, durch das die Hydraulikflüssigkeit abströmt. Hierbei ist mit der Dimensionierung des Plattenspiels die hydraulische Dämpfung der Passvorrichtung eingestellt.

Die Passvorrichtung weist bevorzugt ein Rückschlagventil auf, via das die Aussparung an ein Hydraulikreservoir für das Druckbeaufschlagen mit dem Hydraulikfluid angeschlossen ist. Ferner ist das Lager mit einem Lageröl geschmiert, das bevorzugt die Hydraulikflüssigkeit ist. Hierbei ist es bevorzugt, dass das Lageröl von einer Lagerölversorgung des Lagers bereitgestellt ist.

Der Vorsprung ist bevorzugt von einem Vorsprungsstück gebildet, das an der Vorsprungsplatte befestigt ist. Alternativ ist die Vorsprungplatte und der Vorsprung einstückig ausgebildet. Ferner weist bevorzugt die Passvorrichtung eine Einrichtung zur Erfassung des Drucks der Hydraulikflüssigkeit in der Aussparung auf.

Der Erfindung liegt der Gedanke zugrunde, einen Passkeil mit einem hydraulischen Spielausgleich zu schaffen. Die Hydraulikflüssigkeit wird von einem bereits bestehenden Schmierölsystem als die Lagerölversorgung entnommen, wobei das Schmieröl als das Lageröl beim Betrieb mit für die Passvorrichtung ausreichendem Druck stets zur Verfügung steht. Bevorzugt wird bei einer Montage der Lageranordnung die Passvorrichtung mit demselben Spiel eingepasst, das vorzusehen wäre, wenn die Lageranordnung herkömmlich mit einem Passkeil montiert werden würde. Dadurch ist für die erfindungsgemäße Lageranordnung mit der erfindungsgemäßen Passvorrichtung eine Spielfreiheit eingestellt, wie sie herkömmlich vorteilhaft ist, wobei die relative Bewegung des Lagers zum Lagergehäuse von der Hydraulikflüssigkeit hydraulisch gedämpft ist. Dadurch sind vorteilhaft die herkömmlich bekannten Einstellmöglichkeiten bezüglich der Lage des Lagers im Lagergehäuse ermöglicht und zusätzlich die rotordynamischen Eigenschaften der Lageranordnung aufgrund der hydraulisch gedämpften, relativen Bewegung des Lagers im Lagergehäuse verbessert.

Eine Dampfturbine weist herkömmlich ein Schmierölsystem auf, das Lager der Dampfturbine Lageröl bei etwa 2 bis 3 bar zur Verfügung stellt, wobei das Lageröl bevorzugt die Hydraulikflüssigkeit ist.

Durch das Vorsehen des Rückschlagventils ist es vorteilhaft unterbunden, dass ein Rückströmen der Hydraulikflüssigkeit unterbunden wird, wenn die Passvorrichtung mechanisch belastet ist.

Bevorzugt ist der Passvorrichtungshohlraum derart dimensioniert, wie er in einer herkömmlichen Lageranordnung vorgesehen werden würde. Dadurch kann vorteilhaft eine bestehende Lageranordnung mit der erfindungsgemäßen Passvorrichtung nachgerüstet werden, ohne dass die Lageranordnung komplett ausgetauscht zu werden braucht. Der von der erfindungsgemäßen Passvorrichtung verursachte zusätzliche Lagerölverbrauch ist verglichen mit dem gesamten Lagerölverbrauch des Lagers im Wesentlichen vernachlässigbar, so dass bei der Nachrüstung der bestehenden Lageranordnung mit der erfindungsgemäßen Passvorrichtung eine Anpassung der Lagerölversorgung in der Regel nicht vorgenommen zu werden braucht.

Im Folgenden wird eine bevorzugte Ausführungsform der erfindungsgemäßen Lageranordnung mit der erfindungsgemäßen Passvorrichtung anhand der beigefügten schematischen Zeichnungen erläutert. Es zeigen:
Figur 1 einen Querschnitt durch die Ausführungsform der Lageranordnung und
Figur 2 eine Detailansicht aus Figur 1.

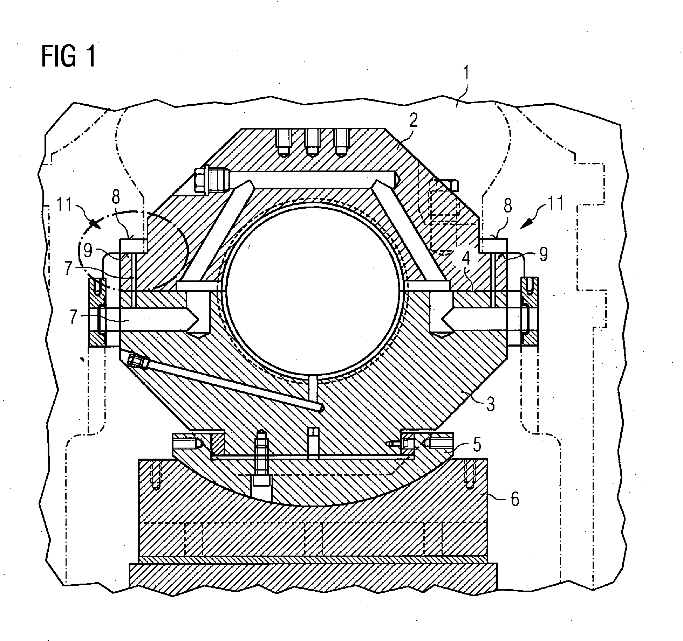

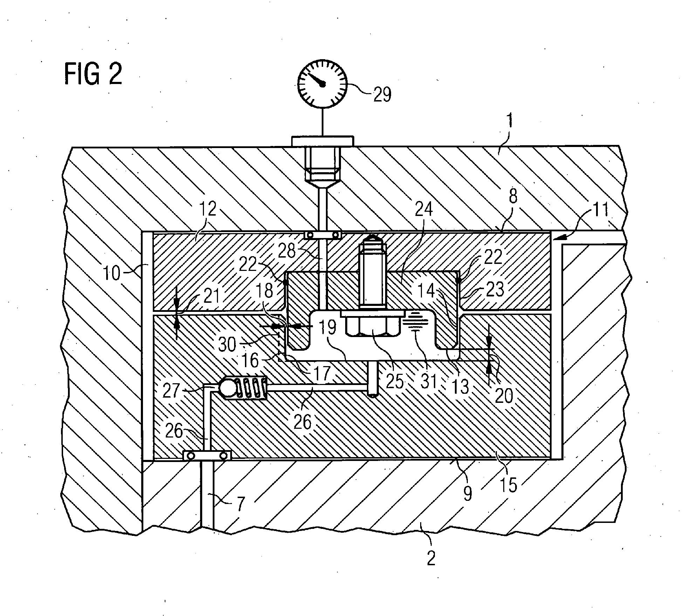

Wie es aus Figuren 1 und 2 ersichtlich ist, weist eine Lageranordnung ein Lagergehäuse 1 und ein Lager auf, das von einer oberen Lagerschale 2 und einer unteren Lagerschale 3 gebildet ist. Die obere Lagerschale 2 und die untere Lagerschale 3 bilden eine horizontal verlaufende Trennfuge 4, wobei die untere Lagerschale 3 mittels eines Lagerschuhs 5 auf einem Fundament 6 abgestützt ist. In der unteren Lagerschale 3 ist ein Ölversorgungskanal 7 zur Versorgung des Lagers mit einem Lageröl von einer Lagerölversorgung (nicht gezeigt) vorgesehen.

Für den Einbau des Lagers und dessen Ausrichtung ist an dem Lagergehäuse 1 eine Lagergehäuseabstützfläche 8 und an der Oberseite der oberen Lagerschale 2 eine Lagerabstützfläche 9 vorgesehen. Die Abstützflächen 8, 9 sind einander gegenüberliegend und parallel verlaufend angeordnet, so dass von den Abstützflächen 8, 9 ein Passvorrichtungshohlraum 10 begrenzt ist. In den Passvorrichtungshohlraum 10 ist eine Passvorrichtung 11 eingesetzt, die sowohl an der Lagergehäuseabstützfläche 8 als auch an der Lagerabstützfläche 9 abstützbar ist.

Die Lagerabstützflächen 8, 9 sind horizontal verlaufend angeordnet, wobei der Passvorrichtungshohlraum 10 quaderförmig ist. Die Passvorrichtung 11 weist eine Vorsprungsplatte 12 mit einem Vorsprung 13 auf, wobei die Vorsprungsplatte 12 mit ihrer Oberseite der Lagergehäuseabstützfläche 8 zugewandt in dem Passvorrichtungshohlraum 10 angeordnet ist und der Vorsprung 13 an der der Oberseite abgewandten Seite nach unten vorsteht. Der Vorsprung 13 ist zylinderförmig ausgebildet, so dass der Vorsprung 13 in jeder seiner Horizontalebene einen kreisförmigen Vorsprungsumfang 14 hat.

Ferner weist die Passvorrichtung 11 eine Aussparungsplatte 15 auf, die in dem Passvorrichtungshohlraum 10 unmittelbar benachbart zur Vorsprungsplatte 12 angeordnet ist und mit ihrer Unterseite an der Lagerabstützfläche 9 aufliegt. An der der Unterseite abgewandten Seite der Aussparungsplatte 15 ist eine Aussparung 16 vorgesehen, die als Negativform zum Vorsprung 13 ausgebildet ist. Der Vorsprung 13 greift in die Aussparung 16 ein, wobei am Aussparungsumfang 17 zum Vorsprungsumfang 14 ein Vorsprungspiel 18 eingestellt ist. Die Aussparung 16 hat eine derartige Tiefe, dass der Aussparungsgrund 19 von der Unterseite des Vorsprungs 13 unter Ausbildung eines Resthubs 20 angeordnet ist. Liegen die Vorsprungsplatte 12 an der Lagergehäuseabstützfläche 8 und die Aussparungsplatte 15 an der Lagerabstützfläche 9 an, ist an den unmittelbar benachbart aneinanderliegenden Seiten der Vorsprungsplatte 12 und der Aussparungsplatte 15 ein vertikales Plattenspiel 21 ausgebildet.

In der der Aussparungsplatte 15 zugewandten Seite der Vorsprungsplatte 12 ist eine Vorsprungsplattenaussparung 23 ausgebildet, in die ein Vorsprungsstück 24 eingesetzt ist. Das Vorsprungsstück 24 ragt aus der Vorsprungsplattenaussparung 23 vor und bildet dadurch den Vorsprung 13. Ferner ist das Vorsprungsstück 24 mit einer Befestigungsschraube 25 in der Vorsprungsplattenaussparung 23 und somit an der Vorsprungsplatte 12 befestigt. In der Vorsprungsplattenaussparung 23 ist zwischen dem Vorsprungsstück 24 und der Vorsprungsplatte 12 ein O-Ring eingebaut.

Innerhalb der Aussparungsplatte 15 ist ein Ölzuführkanal 26 ausgebildet, der sowohl in den Ölversorgungskanal 7 als auch in die Aussparung 16 am Aussparungsgrund 19 mündet. In den Ölführungskanal 26 ist ein Rückschlagventil 27 so eingebaut, dass eine Rückströmung von der Aussparung 16 zu dem Ölversorgungskanal 7 unterbunden ist.

Ferner ist in der Vorsprungsplatte 12 eine Druckleitung 28 vorgesehen, die in dem Vorsprungsstück 24 fortgeführt in die Aussparung 16 mündet, wobei an die Druckleitung 28 ein Druckmessinstrument zum Erfassen von Druck innerhalb der Aussparung 16 angeschlossen ist. Außerdem ist zwischen dem Aussparungsumfang 17 und dem Vorsprungsumfang 14 ein Hydraulikkanal 30 ausgebildet, der das Plattenspiel 21 mit der Aussparung 16 fluidleitend verbindet.

Mit der Lagerölversorgungsanlage ist ein Lageröl 31 dem Lager bereitgestellt. Der Druck des Lageröls am Lager beträgt beispielsweise etwa 3 bar. Von dem Ölversorgungskanal 7 gelangt das Lageröl 31 via das Rückschlagventil 27 in die Aussparung 16, wodurch die Aussparung 16 von dem Lageröl 31 druckbeaufschlagt ist. Dieser Druck des Lageröls 31 in der Aussparung 16 ist von dem Druckmessinstrument 29 und der Druckleitung 28 erfassbar. Das Lageröl 31 in der Aussparung 16 strömt durch den Hydraulikkanal 30 und das Vorsprungspiel 18 durch das Plattenspiel 21 in den Passvorrichtungshohlraum 10. Das Plattenspiel 21 ist so dimensioniert, dass am Hydraulikkanal 30 bzw. am Vorsprungspiel 18 sich eine hydrodynamische Engstelle ausbilden kann. Gemäß einer Ausführungsform wäre es denkbar, den Hydraulikkanal 30 wegzulassen, so dass die hydrodynamische Engstelle von dem Vorsprungspiel 18 definiert ist. Ist der Hydraulikkanal 30, wie es gemäß Fig. 2 gezeigt ist, vorgesehen, so ist im Wesentlichen die hydrodynamische Engstelle von den geometrischen Abmaßen des Hydraulikkanals 30 definiert. Entsprechend dem Festlegen der hydrodynamischen Engstelle strömt das Lageröl 31 unter einem Druckabfall an der hydrodynamischen Engstelle via das Plattenspiel 21 in den Passvorrichtungshohlraum 10.

Der Resthub 20 ist größer als das Plattenspiel 21, so dass, wenn das Lagergehäuse 1 auf die obere Lagerschale 2 aufgrund von einer mechanischen Einwirkung gedrückt wird, der Passvorrichtungshohlraum 10 sich verkleinert bis das Plattenspiel 21 überbrückt ist und die Vorsprungsplatte 12 an der Aussparungsplatte 15 anliegt. Bei dieser Bewegung wird das Vorsprungsstück 24 mit ihrem Vorsprung 13 weiter in die Aussparung 16 hinein verfahren, woraus eine Verkleinerung des Volumens zwischen dem Vorsprungsstück 24 und dem Aussparungsgrund 19 resultiert. Somit wird der Druck des Lageröls 31 in der Aussparung 16 erhöht, wodurch das Rückschlagventil 27 in seine Geschlossenstellung gebracht wird. Dadurch, dass das Lageröl 31 inkompressibel ist, wird die Volumenverkleinerung dadurch kompensiert, dass ein Teil des in der Aussparung 16 sich befindenden Lageröls 31 im Wesentlichen durch den Hydraulikkanal 30 via das Plattenspiel 21 in den Passvorrichtungshohlraum 10 strömt. Dadurch entsteht einer der Bewegung entgegengerichteten hydrodynamischen Widerstandskraft, wodurch das Zueinanderbewegen der Vorsprungsplatte 12 und der Aussparungsplatte 15 hydrodynamisch gedämpft ist.

Bei einem Auseinanderdriften der Vorsprungsplatte 12 und der Aussparungsplatte 15 wird das Rückschlagventil 27 in seine Offenstellung gebracht, wodurch in die Aussparung 16 von dem Ölversorgungskanal 7 via den Ölzuführkanal 26 weiteres Lageröl 31 strömen kann. Dadurch, dass das Rückschlagventil 27 dabei in seiner Offenstellung ist, geschieht das Befüllen der Aussparung 16 mit dem Lageröl 31 im Wesentlichen drucklos, d.h. bei Lageröldruck von beispielsweise 2 bar, so dass die Auseinanderbewegung der Vorsprungsplatte 12 und der Aussparungsplatte 15 im Wesentlichen ohne eine hydraulische Dämpfung stattfindet.

Der Passvorrichtungshohlraum 10 ist mit dem Ölversorgungskanal 7 fluidleitend verbunden, so dass aus dem Plattenspiel 21 ausströmendes Lageröl 31 zurück in den Kreislauf der Lagerölversorgungsanlage strömen kann.

## Patentansprüche

1. Lageranordnung mit einem Lagergehäuse (1) und einem Lager (2, 3) und einer Passvorrichtung zum Lagern des Lagers (2, 3) in dem Lagergehäuse (1), mit einer einen zylinderförmigen Vorsprung (13) aufweisenden Vorsprungsplatte (12) und einer Aussparungsplatte (15), die an der den Vorsprung (13) aufweisenden Seite der Vorsprungsplatte (15) angeordnet ist und in der eine zylinderförmige Aussparung (16) vorgesehen ist, in die der Vorsprung (13) unter Ausbilden eines Vorsprungspiels (18) zwischen dem Vorsprungsumfang (14) und dem Aussparungsumfang (17) längsverschiebbar eingreift, wobei an dem Lagergehäuse (1) eine Lagergehäuseabstützfläche (8) und an dem Lager (2, 3) eine zur Lagergehäuseabstützfläche (8) parallele Lagerabstützfläche (9) ausgebildet sind, zwischen denen die Passvorrichtung (11) angeordnet ist, wobei die Aussparung (16) mit einer Hydraulikflüssigkeit (31) druckbeaufschlagt ist, so dass in Abhängigkeit des Vorsprungspiels (18) dieses von der Hydraulikflüssigkeit (31) durchströmt ist, wodurch die Vorsprungsplatte (12) gegen eine der Abstützflächen (8) und die Aussparungsplatte (15) gegen die andere der Abstützflächen (9) hydraulisch gedämpft vorgespannt sind.

2. Lageranordnung gemäß Anspruch 1,
wobei zwischen dem Vorsprungsumfang (14) und dem Aussparungsumfang (17) ein Hydraulikkanal (30) ausgebildet ist, mit dessen Querschnitt die hydraulische Dämpfung der Passvorrichtung (1) eingestellt ist.

3. Lageranordnung gemäß Anspruch 1 oder 2,
wobei zwischen der Aussparungsplatte (15) und der Vorsprungsplatte (12) ein Plattenspiel (21) ausgebildet ist, durch das die Hydraulikflüssigkeit (31) abströmt.

4. Lageranordnung gemäß Anspruch 3,
wobei mit der Dimensionierung des Plattenspiels (21) die hydraulische Dämpfung der Passvorrichtung (1) eingestellt ist.

5. Lageranordnung gemäß einem der Ansprüche 1 bis 4,
wobei die Passvorrichtung (11) ein Rückschlagventil (27) aufweist, via das die Aussparung (16) an ein Hydraulikreservoir für das Druckbeaufschlagen mit dem Hydraulikfluid (31) angeschlossen ist.

6. Lageranordnung gemäß einem der Ansprüche 1 bis 6,
wobei das Lager (2, 3) mit einem Lageröl geschmiert ist, das die Hydraulikflüssigkeit (31) ist.

7. Lageranordnung gemäß Anspruch 6,
wobei das Lageröl (31) von einer Lagerölversorgung des Lagers (2, 3) bereitgestellt ist.

8. Lageranordnung gemäß einem der Ansprüche 1 bis 7,
wobei der Vorsprung (13) von einem Vorsprungsstück (24) gebildet ist, das an der Vorsprungsplatte (12) befestigt ist.

9. Lageranordnung gemäß einem der Ansprüche 1 bis 8,
wobei die Passvorrichtung eine Einrichtung (28, 29) zur Erfassung des Drucks der Hydraulikflüssigkeit (31) in der Aussparung (16) aufweist.

## Claims

1. Bearing arrangement with a bearing housing (1) and a bearing (2, 3) and a fitting device for mounting the bearing (2, 3) in the bearing housing (1), with a projection plate (12) having a cylindrical projection (13) and a recess plate (15) which is arranged on that side of the projection plate (12) that has the projection (13) and in which there is provided a cylindrical recess (16) in which the projection (13) engages forming a projection clearance (18) between the projection circumference (14) and the recess circumference (17) in a longitudinally displaceable manner, wherein there are formed on the bearing housing (1) a bearing housing support surface (8) and on the bearing (2, 3) a bearing support surface (9) parallel to the bearing housing support surface (8), between which is arranged the fitting device (11), wherein the recess (16) is pressurized with a hydraulic fluid (31), such that, depending on the projection clearance (18), the hydraulic fluid (31) flows through this clearance, whereby the projection plate (12) is preloaded in a hydraulically damped manner against one of the support surfaces (8) and the recess plate (15) is preloaded in a hydraulically damped manner against the other of the support surfaces (9).

2. Bearing arrangement according to Claim 1,
wherein a hydraulic channel (30), whose cross section sets the hydraulic damping of the fitting device (11), is formed between the projection circumference (14) and the recess circumference (17).

3. Bearing arrangement according to Claim 1 or 2,
wherein between the recess plate (15) and the projection plate (12) there is formed a plate clearance (21) through which the hydraulic fluid (31) flows away.

4. Bearing arrangement according to Claim 3,
wherein the dimensions of the plate clearance (21) set the hydraulic damping of the fitting device (11).

5. Bearing arrangement according to one of Claims 1 to 4,
wherein the fitting device (11) has a check valve (27) via which the recess (16) is connected to a hydraulic reservoir for pressurizing with the hydraulic fluid (31).

6. Bearing arrangement according to one of Claims 1 to 5,
wherein the bearing (2, 3) is lubricated with a bearing oil, which is the hydraulic fluid (31).

7. Bearing arrangement according to Claim 6,
wherein the bearing oil (31) is provided by a bearing oil supply of the bearing (2, 3).

8. Bearing arrangement according to one of Claims 1 to 7,
wherein the projection (13) is formed by a projecting part (24) which is secured to the projection plate (12).

9. Bearing arrangement according to one of Claims 1 to 8,
wherein the fitting device has a device (28, 29) for detecting the pressure of the hydraulic fluid (31) in the recess (16).

## Revendications

1. Agencement de palier ayant un logement (3) de palier et un palier (2, 3) et un dispositif d'ajustement pour monter le palier (2, 3) dans le logement (1) de palier, comprenant un plateau (12) de saillie ayant une saillie (13) en forme de cylindre et un plateau (15) d'évidement, qui est monté sur la face du plateau (12) de saillie (13) et dans lequel est prévu un évidement (16) en forme de cylindre, dans lequel la saillie (13) pénètre avec possibilité de coulisser longitudinalement tout en formant un jeu (18) de saillie entre le pourtour (14) de la saillie et le pourtour (17) de l'évidement, dans lequel il est formé sur le logement (1) de palier une surface (8) d'appui de logement de palier et sur le palier (2, 3) une surface (9) d'appui de palier, parallèle à la surface (8) d'appui de logement de palier, entre lesquelles le dispositif (11) d'adaptation est disposé, dans lequel l'évidement (16) est alimenté en pression par un fluide (31) hydraulique de manière à ce que, en fonction du jeu (18) de saillie, le liquide (31) hydraulique y passe, grâce à quoi le plateau (12) de saillie est précontraint de manière amortie hydrauliquement sur l'une des surfaces (8) d'appui et le plateau (15) d'évidement sur l'autre des surfaces (9) d'appui.

2. Agencement de palier suivant la revendication 1,
dans lequel entre le pourtour (14) de la saillie et le pourtour (17) de l'évidement est constitué un canal (30) hydraulique, par la section transversale duquel l'amortissement hydraulique du dispositif (1) d'adaptation est réglé.

3. Agencement de palier suivant la revendication 1 ou 2,
dans lequel il est constitué entre le plateau (15) d'évidement et le plateau (12) de saillie un jeu (21) de plateau, par lequel s'écoule le liquide (31) hydraulique.

4. Agencement de palier suivant la revendication 3,
dans lequel l'amortissement hydraulique du dispositif (1) d'adaptation est réglé, par le dimensionnement du jeu (21)de plateau.

5. Agencement de palier suivant l'une des revendications 1 à 4,
dans lequel le dispositif (1) d'adaptation a un clapet antiretour (27), par l'intermédiaire duquel l'évidement (16) est raccordé à un réservoir hydraulique pour l'alimentation en pression par le fluide (31) hydraulique.

6. Agencement de palier suivant l'une des revendications 1 à 6,
dans lequel le palier (2, 3) est lubrifié par une huile de palier, qui est le liquide (31) hydraulique.

7. Agencement de palier suivant la revendication 6,
dans lequel l'huile (31) de palier est procurée par une alimentation du palier (2, 3) en huile de palier.

8. Agencement de palier suivant l'une des revendications 1 à 7,
dans lequel la saillie (13) est formée par une pièce (24) de saillie, qui est fixée au plateau (12) de saillie.

9. Agencement de palier suivant l'une des revendication 1 à 8,
dans lequel le dispositif d'adaptation a un dispositif (28, 29) de détection de la pression du liquide (31) hydraulique dans l'évidement (16).
